# EUROPÄISCHE PATENTANMELDUNG

(11) **EP 3 816 367 A1**
(43) Veröffentlichungstag der Anmeldung: **05.05.2021**
(21) Anmeldenummer: 19205726.3
(22) Anmeldetag: 28.10.2019
(51) Int. Cl.: E04G 11/48, E04G 25/06, E21D 15/24, F16B 7/18, E04G 25/04

(54) **SCHALUNGSSTÜTZE**

(71) Anmelder: DOKA GmbH, 3300 Amstetten (AT)
(72) Erfinder: PLANK, Anton, 3300 Amstetten (AT); BURGSTALLER, Gerald, 3300 Amstetten (AT); SPREITZER, Erich, 3341 Ybbsitz (AT)
(74) Vertreter: Sonn & Partner Patentanwälte

(57) **Zusammenfassung**

1. Schalungsstütze (1) mit einem äußeren Stützenteil (2) und einem teleskopierbaren inneren Stützenteil (3), wobei der innere Stützenteil (3) einen Verdrehsicherungsabschnitt (14) und der äußere Stützenteil (2) einen Verdrehsicherungsbereich (4) mit einer ersten Innenkontur (17) aufweist, wobei der Verdrehsicherungsbereich (4) des äußeren Stützenteils (2) beim Teleskopieren des inneren Stützenteils (3) derart mit dem Verdrehsicherungsabschnitt (14) des inneren Stützenteils (3) zusammenwirkt, dass eine Verdrehung des inneren Stützenteils (3) um seine Längsachse gegenüber dem äußeren Stützenteil (2) blockiert wird, wobei der äußere Stützenteil (2) einen Führungsbereich (6) mit einer von der ersten Innenkontur (17) verschiedenen zweiten Innenkontur (18) zur Führung des inneren Stützenteils (3) aufweist.

## Beschreibung

Die Erfindung betrifft eine Schalungsstütze mit einem äußeren Stützenteil und einem teleskopierbaren inneren Stützenteil, wobei der innere Stützenteil einen Verdrehsicherungsabschnitt und der äußere Stützenteil einen Verdrehsicherungsbereich mit einer ersten Innenkontur aufweist, wobei der Verdrehsicherungsbereich des äußeren Stützenteils beim Teleskopieren des inneren Stützenteils derart mit dem Verdrehsicherungsabschnitt des inneren Stützenteils zusammenwirkt, dass eine Verdrehung des inneren Stützenteils um seine Längsachse gegenüber dem äußeren Stützenteil blockiert wird.

Des Weiteren betrifft die Erfindung eine Deckenschalung zur Herstellung eines Deckenelements mit zumindest einer Schalungsplatte und zumindest einer Schalungsstütze.

Schalungsstützen der genannten Art werden auf Baustellen bei der Herstellung von Decken verwendet. Die Schalungsstützen werden hierzu anhand eines Schalplans aufgestellt und aneinander ausgerichtet. Bei der Ausrichtung der Schalungsstützen muss besonders auf deren Orientierung zueinander geachtet werden. Vor allem sollten die Stützenköpfe an den Kopfenden der Schalungsstützen parallel ausgerichtet sein, um im nächsten Arbeitsschritt das Auflegen von Quer- und Längsträgern sowie Schalungsplatten zu ermöglichen. Nachdem die Deckenschalung errichtet wurde, wird Beton auf die Schalungsplatten gegossen. Die Auflast des Betons wird über die Schalungsstützen nach unten in den Boden abgeleitet.

Die DE 201 22 664 U1 zeigt eine Schalungsstütze. Die Schalungsstütze weist einen äußeren und einen inneren Stützenteil auf, der zur Verlängerung der Schalungsstütze herausgezogen werden kann. Zur Arretierung der beiden Stützenteile besitzen der äußere und der innere Stützenteil jeweils Sicherungslöcher, durch welche ein Sicherungsbolzen durchführbar ist. Allerdings können bei diesem Stand der Technik die Stützenteile während des Teleskopierens zueinander verdreht werden.

Eine weitere Schalungsstütze ist aus der DE 94 21 029 U1 bekannt. Diese Schalungsstütze weist ebenfalls einen äußeren und einen darin befindlichen inneren Stützenteil auf, wobei an beiden Stützenteilen zur Arretierung Lochpaare mit gegenüberliegenden Sicherungslöchern vorgesehen sind, durch welche ein Sicherungsbolzen durchführbar ist. Auch hier ist eine Verdrehung der beiden Stützenteile während des Teleskopierens möglich.

Des Weiteren ist aus der DE 10 2012 211 384 A1 eine Schalungsstütze bekannt, bei der Verdrehungen des inneren Stützenteils gegenüber dem äußeren Stützenteil beim Teleskopieren blockiert werden. Nachteilig bei der gezeigten Schalungsstütze ist jedoch, dass die Schalungsstütze einen komplizierten Aufbau aufweist und deshalb aufwendig herzustellen ist.

Bei Schalungsstützen ohne Verdrehsicherung geht beim Aufstellen der Schalungsstützen viel Zeit verloren, da die Stützenteile in der teleskopierten Stellung derart zueinander orientiert werden müssen, dass der Sicherungsbolzen durch die Sicherungslöcher des inneren und äußeren Stützenteils durchgeführt werden kann. Gleichzeitig muss beim Aufstellen der Schalungsstützen, wie oben bereits erläutert, darauf geachtet werden, dass die Kopfplatten derselben Reihe von Schalungsstützen die gleiche Orientierung aufweisen, sodass später Quer- und Längsträger aufgelegt werden können. Diese Arbeitsschritte müssen bei Schalungsstützen ohne Verdrehsicherung von Hand ausgeführt werden, was durch das hohe Gewicht der Schalungsstützen zusätzlich erschwert wird.

Bekannte Schalungsstützen mit Verdrehsicherungen besitzen andererseits im Vergleich zu Schalungsstützen ohne Verdrehsicherungen einen vergleichsweise komplexen Aufbau, der die Herstellung und Handhabung erschwert und das Gewicht erhöht. Wünschenswert wären jedoch leicht zu fertigende Schalungsstützen, die einfach zu bedienen sind, eine geringe Fehleranfälligkeit aufweisen, hohen Lasten standhalten und ein geringes Gewicht aufweisen.

Es ist daher Aufgabe der vorliegenden Erfindung, die Nachteile des Standes der Technik zumindest zu reduzieren oder zur Gänze zu beseitigen. Insbesondere ist es Aufgabe der vorliegenden Erfindung, eine einfach zu handhabende und leicht zu fertigende Schalungsstütze zu schaffen, die mit konstruktiv einfachen Mitteln die Ausrichtung und Arretierung der Stützenteile erleichtert und auf einfache Weise rasch teleskopiert werden kann.

Gelöst wird diese Aufgabe durch eine Schalungsstütze der eingangs erwähnten Art mit den Merkmalen des Anspruch 1. Bevorzugte Ausführungsformen sind in den abhängigen Ansprüchen angegeben.

Erfindungsgemäß weist der äußere Stützenteil einen Führungsbereich mit einer von der ersten Innenkontur verschiedenen zweiten Innenkontur zur Führung des inneren Stützenteils auf. Vorteilhafterweise wird durch die Führung des inneren Stützenteils im Führungsbereich das Teleskopieren der Schalungsstütze erleichtert. Zweckmäßigerweise kann der Führungsbereich des äußeren Stützenteils dabei den Außenumfang des inneren Stützenteils zur Gänze umfassen. Die zweite Innenkontur kann zu diesem Zweck an die Außenkontur des inneren Stützenteils angepasst sein und dieser in Form und Größe im Wesentlichen entsprechen. Die zweite Innenkontur kann sich von der ersten Innenkontur beispielsweise hinsichtlich Größe und/oder Form unterscheiden. Vorzugsweise ist die zweite Innenkontur gegenüber der ersten Innenkontur verjüngt. Neben der Führung des inneren Stützenteils beim Teleskopieren werden bei der erfindungsgemäßen Schalungsstütze durch das Zusammenwirken des Verdrehsicherungsabschnitts und des Verdrehsicherungsbereichs Verdrehungen des inneren Stützenteils gegenüber dem äußeren Stützenteils, vorzugsweise durch Formschluss, verhindert. Mit anderen Worten sind der innere und der äußeren Stützenteil der erfindungsgemäßen Schalungsstütze stets gleich zueinander orientiert und weisen daher im bestimmungsgemäßen Gebrauch immer dieselbe Drehlage zueinander auf. Die erfindungsgemäße Schalungsstütze ist demnach verdrehgesichert. Dadurch können die Stützenteile leichter und vor allem schneller arretiert werden, wodurch sich der Zeitaufwand beim Aufstellen der Schalungsstützen reduziert. Ein besonderer Vorteil der stets gleichen Orientierung des inneren und äußeren Stützenteils liegt darin, dass bei Vorhandensein von Sicherungslöchern die Durchführung eines Sicherungsbolzens zur Arretierung erleichtert wird. Der Verdrehsicherungsbereich des äußeren Stützenteils ist jener Bereich, der durch Zusammenwirken mit dem Verdrehsicherungsabschnitt des inneren Stützenteils eine Verdrehung des inneren Stützenteils gegenüber dem äußeren Stützenteil blockiert, gleichzeitig aber eine translatorische Verschiebung des inneren Stützenteils zum äußeren Stützenteil in Längsrichtung der Schalungsstütze erlaubt. Vorzugsweise grenzt der Verdrehsicherungsbereich an den Führungsbereich und geht in diesen über. Der Führungsbereich kann insbesondere in einem oberen Endbereich des äußeren Stützenteils angeordnet sein.

Für die Zwecke dieser Offenbarung beziehen sich Richtungsangaben wie "oben", "unten" und "außen" auf den bestimmungsgemäßen Gebrauchszustand der Schalungsstütze, in welchem die Schalungsstütze auf einer Aufstandsfläche steht und "oben" Längs- und Querträger auf die Schalungsstütze gelegt werden können. "Nach innen" bedeutet dabei zur Längsachse hin.

Der Verdrehsicherungsbereich des äußeren Stützenteils besitzt erfindungsgemäß eine von der zweiten Innenkontur verschiedene erste Innenkontur. Die erste Innenkontur kann beispielsweise eine polygone Form besitzen. Es kann auch zum Beispiel vorgesehen sein, dass der äußere Stützenteil im Verdrehsicherungsbereich ein nach innen ragendes Verdrehsicherungselement aufweist, das mit dem Verdrehsicherungsabschnitt des inneren Stützenteils zusammenwirkt. In einer bevorzugten Ausführungsform ist die Innenkontur im gesamten Verdrehsicherungsbereich im Wesentlichen gleich. Vorzugsweise ist auch die Innenkontur im gesamten Führungsbereich, bis auf einen etwaigen Übergangsbereich zum Verdrehsicherungsbereich, im Wesentlichen gleich. Dies muss allerdings nicht zwingend der Fall sein. Wichtig ist, dass der Führungsbereich eine zweite Innenkontur aufweist, die von der ersten Innenkontur verschieden ist. Die erste Innenkontur soll dabei eine Verdrehung des inneren Stützenteils blockieren, während die zweite Innenkontur die Führung des inneren Stützenteils ermöglicht. In dieser Offenbarung ist unter "Innenkontur" die innere Berandung eines Querschnitts zu verstehen. Dementsprechend bezeichnet eine Außenkontur die äußere Berandung eines Querschnitts. Die erste Innenkontur bezeichnet demnach die innere Berandung eines Querschnitts des äußeren Stützenteils im Verdrehsicherungsbereich, gegebenenfalls mit etwaigen Verdrehsicherungselementen. Die zweite Innenkontur bezeichnet demnach die innere Berandung eines Querschnitts des äußeren Stützenteils im Führungsbereich. Um Gewicht einzusparen, ist der innere Stützenteil vorzugsweise hohl ausgebildet. Zudem kann der innere Stützenteil einstückig, gegebenenfalls mit Fügeverbindungen, ausgebildet sein. Der innere und der äußere Stützenteil bestehen vorzugsweise aus Metall, noch mehr bevorzugt aus Stahl. Besonders bevorzugt ist, wenn der innere und der äußere Stützenteil aus unterschiedlichen Materialien bestehen. Es kann auch vorgesehen sein, dass der äußere Stützenteil an dem dem Führungsbereich gegenüberliegenden Ende einen Bereich mit einer im Wesentlichen kreisrunden Innenkontur und/oder Außenkontur aufweist. Dadurch kann das Anschweißen einer Platte, insbesondere einer Bodenplatte, erleichtert werden.

In einer Ausführungsform kann vorgesehen sein, dass der innere Stützenteil den Verdrehsicherungsabschnitt und einen Ausziehabschnitt aufweist. Der Verdrehsicherungsabschnitt kann mit dem Ausziehabschnitt verbunden sein und insbesondere in diesen übergehen. Der Ausziehabschnitt und der Verdrehsicherungsabschnitt können einstückig sein. Der Ausziehabschnitt ist dabei jener Abschnitt, der beim Teleskopieren aus dem äußeren Stützenteil herausgezogen werden kann und dadurch die Schalungsstütze verlängert. Der Verdrehsicherungsabschnitt und ein Teil des Ausziehabschnitts können jedoch zum Zwecke der Stabilität und der Sicherung auch im teleskopierten Zustand im äußeren Stützenteil verbleiben. In einer anderen Ausführungsform kann vorgesehen sein, dass sich der Verdrehsicherungsabschnitt im Wesentlichen über die gesamte Länge des inneren Stützenteils erstreckt. In Bezug auf den Führungsbereich des äußeren Stützenteils kann vorgesehen sein, dass die zweite Innenkontur im Wesentlichen der Außenkontur des inneren Stützenteils, gegebenenfalls der Außenkontur des Ausziehabschnitts des inneren Stützenteils, entspricht. Unter anderem kann der innere Stützenteil bzw. der Ausziehabschnitt im Wesentlichen eine kreisrunde Außenkontur aufweisen und die zweite Innenkontur dementsprechend ebenfalls eine kreisrunde Form aufweisen. Der Führungsbereich kann zudem eine Außenkontur aufweisen, die in der Form der zweiten Innenkontur entspricht. Auch der Verdrehsicherungsbereich kann eine Außenkontur aufweisen, die der Form der ersten Innenkontur entspricht.

In einer bevorzugten Ausführungsform ist vorgesehen, dass die zweite Innenkontur eine kreisrunde Form aufweist und vorzugsweise gegenüber der ersten Innenkontur verjüngt ist. "Verjüngt" bedeutet in diesem Zusammenhang, dass die von der zweiten Innenkontur begrenzte Fläche kleiner ist als die von der ersten Innenkontur begrenzte Fläche. Vorteilhaft ist dabei, wenn die Form der zweiten Innenkontur der Form der Außenkontur des inneren Stützenteils, insbesondere eines Ausziehabschnitts, entspricht. Durch die gegenüber der ersten Innenkontur verjüngte zweite Innenkontur kann vorteilhafterweise auch der Eintritt von Fremdkörpern in das Innere der Schalungsstütze verhindert werden.

Um die Herstellung und Handhabung zu vereinfachen, können der Verdrehsicherungsbereich und der Führungsbereich einstückig ausgebildet sein und insbesondere stufenlos ineinander übergehen. Insbesondere können der Verdrehsicherungsbereich und der Führungsbereich aus einem einzigen Werkstück, gegebenenfalls mit Fügeverbindungen, erzeugt worden sein. Dies kann insbesondere durch eine Umformung eines Halbzeugs bewerkstelligt werden. Demnach sind der Verdrehsicherungsbereich und der Führungsbereich ohne Fügeverbindung miteinander verbunden. Stufenlos bedeutet in diesem Zusammenhang, dass ein Übergangsbereich zwischen dem Führungsbereich und dem Verdrehsicherungsbereich unter anderem frei von Vorsprüngen, Abstufungen und Versätzen ist.

In einer bevorzugten Ausführungsform ist vorgesehen, dass der Verdrehsicherungsabschnitt zumindest eine Verdrehsicherungsausbuchtung und der äußere Stützenteil im Verdrehsicherungsbereich zumindest eine Verdrehsicherungseinbuchtung aufweist, wobei die Verdrehsicherungsausbuchtung beim Teleskopieren des inneren Stützenteils entlang der Verdrehsicherungseinbuchtung verschieblich ist und eine Verdrehung des inneren Stützenteils um seine Längsachse gegenüber dem äußeren Stützenteil blockiert. Die Verdrehsicherungsausbuchtung wirkt also mit der Verdrehsicherungseinbuchtung des äußeren Stützenteils derart zusammen, dass Verdrehungen um die Längsachse blockiert, translatorischen Bewegungen in Längsrichtung der Schalungsstütze aber ermöglicht werden. Die Verdrehsicherungsausbuchtung kann insbesondere in der Verdrehsicherungseinbuchtung gleiten. Die Verdrehsicherungsausbuchtung steht bevorzugt vom inneren Stützenteil radial nach außen ab. Die Verdrehsicherungsausbuchtung kann unter anderem ein Zapfen, eine Ecke, eine Kante oder eine Wölbung sein. Die Verdrehsicherungseinbuchtung ist vorzugsweise länglich ausgebildet ist und in Richtung der Längsachse der Schalungsstütze orientiert.

Die Verdrehsicherungseinbuchtung kann sich an der Innenseite des äußeren Stützenteils befinden. Die Innenseite des äußeren Stützenteils wird durch die Innenwandung des äußeren Stützenteils gebildet. Die Verdrehsicherungseinbuchtung ist vorzugsweise nach außen gewölbt und kann beispielsweise durch eine Nut oder eine Kante gebildet sein. Die Anzahl der Verdrehsicherungseinbuchtungen ist bevorzugt mindestens so hoch wie die Anzahl der Verdrehsicherungsausbuchtungen. Beim Teleskopieren gleitet die Verdrehsicherungsausbuchtung in Längsrichtung der Schalungsstütze in der Verdrehsicherungseinbuchtung. Durch das Zusammenwirken der Verdrehsicherungsausbuchtung mit der Verdrehsicherungseinbuchtung, vorzugsweise durch Formschluss, wird ein Verdrehen der inneren und äußeren Stützenteile zueinander blockiert. Dabei kann natürlich ein geringes Spiel vorgesehen sein, um Verkeilungen zu verhindern und das Teleskopieren zu erleichtern. Alternativ kann die Anordnung auch umgedreht sein, also eine Verdrehsicherungseinbuchtung im Verdrehsicherungsabschnitt und eine Verdrehsicherungsausbuchtung im Verdrehsicherungsbereich vorgesehen sein. Bei dieser alternativen Ausführungsform sind die Verdrehsicherungseinbuchtung und die Verdrehsicherungsausbuchtung nach innen gewölbt und die Verdrehsicherungseinbuchtung gleitet beim Teleskopieren entlang der Verdrehsicherungsausbuchtung.

Günstig ist, wenn die erste Innenkontur eine n-eckige, vorzugsweise einen regelmäßig n-eckige, insbesondere einen 6- oder 8-eckige, Form aufweist und die Verdrehsicherungseinbuchtungen im Querschnitt betrachtet durch die n Ecken der ersten Innenkontur gebildet werden. Die Innenkontur kann im gesamten Verdrehsicherungsbereich gleich sein. Vorteilhafterweise kann der äußere Stützenteil durch die n-eckige Form einer Kreisform angenähert werden, was sich günstig auf die Stabilität der gesamten Schalungsstütze auswirkt. "n" ist hierbei eine natürliche Zahl und bezeichnet die Anzahl der Ecken. Die Ecken bilden dabei die Verdrehsicherungseinbuchtungen, welche von den die Ecken verbindenden Kanten begrenzt werden. Die erste Innenkontur bezeichnet, wie bereits erwähnt, die Innenkontur des Querschnitts des äußeren Stützenteils, also die Kontur der Innenseite oder Innenwandung des äußeren Stützenteils. Im Verdrehsicherungsbereich kann die Form der Außenwandung/Außenkontur kann im Wesentlichen der Form der Innenwandung/Innenkontur entsprechen.

Dazu ist es günstig, wenn der Verdrehsicherungsabschnitt des inneren Stützenteils eine n-eckige, vorzugsweise eine regelmäßig n-eckige, insbesondere eine im Wesentlichen quadratische, Außenkontur aufweist und die n Ecken der Außenkontur im Querschnitt betrachtet jeweils eine Verdrehsicherungsausbuchtung bilden, wobei die Ecken vorzugsweise abgerundet sind. "n" bezeichnet wiederum eine natürliche Zahl und bezeichnet die Anzahl der Ecken. Die Anzahl der Ecken des Verdrehsicherungsabschnitts kann jedoch von der Anzahl der Ecken des Verdrehsicherungsbereiches verschieden sein. Bei dieser Ausführungsform ergeben sich also n Verdrehsicherungsausbuchtungen, wobei für jede Verdrehsicherungsausbuchtung mindestens eine korrespondierende Verdrehsicherungseinbuchtung vorgesehen sein kann. Die Außenkontur des Verdrehsicherungsabschnittes bezeichnet die Außenkontur des Querschnitts des Verdrehsicherungsabschnittes. Die Außenkontur kann im gesamten Verdrehsicherungsabschnitt gleich sein.

Der äußere Stützenteil hat vorzugsweise eine Länge von mindestens 80 cm, insbesondere mindestens 80,8 cm, 135,6 cm, 160,6 cm, 185,6 cm, 210,6 cm, 238,5 cm, 285,6 cm oder 370,6 cm. Der innere Stützenteil hat vorzugsweise eine Länge von mindestens 90 cm, insbesondere mindestens 90,9 cm, 145,7 cm, 170,7 cm, 195,7 cm, 220,7 cm, 245,7 cm, 295,7 cm oder 380,7 cm.

Um einen Großteil der Länge des inneren Stützenteil beim Teleskopieren ausnützen zu können, ist es vorteilhaft, wenn der Verdrehsicherungsabschnitt an einem Endbereich des inneren Stützenteils vorgesehen ist. Der Verdrehsicherungsabschnitt kann dabei den Abschluss, also das Ende, des inneren Stützenteils bilden. Der Endbereich des inneren Stützenteils, an dem der Verdrehsicherungsabschnitt vorgesehen ist, ist jener, der beim Teleskopieren im äußeren Stützenteil verbleibt und nicht herausgezogen wird.

In einer bevorzugten Stellung ist vorgesehen, dass sich der Verdrehsicherungsbereich über die von dem Verdrehsicherungsabschnitt zurückgelegte Distanz zwischen einer vollständig teleskopierten und einer vollständig eingeschobenen Stellung des inneren Stützenteils erstreckt. Die vollständig eingeschobene Stellung ist dabei jene Stellung, in der der innere Stützenteil am weitesten, insbesondere im Wesentlichen zur Gänze, in das äußere Stützenteil eingeschoben ist. Die vollständig teleskopierte Stellung ist dabei eine Stellung, in der das innere Stützenteil zur Verlängerung der Schalungsstütze aus dem äußeren Stützenteil herausgezogen ist, aber sich noch zumindest teilweise in dem äußeren Stützenteil befindet, um die Funktion der Schalungsstütze nicht zu beeinträchtigen.

Vorzugsweise entspricht der größte Außendurchmesser des Verdrehsicherungsabschnitts im Wesentlichen dem größten Innendurchmesser des Verdrehsicherungsbereichs. Der Außendurchmesser des Verdrehsicherungsabschnitts bezieht sich hierbei auf dessen Querschnitt. Regelmäßig entspricht der größte Außendurchmesser der längsten Diagonale. Wenn beispielsweise der Verdrehsicherungsabschnitt eine quadratische Außenkontur besitzt, ist der größte Außendurchmesser die Diagonale des Quadrats. Bei einem n-Eck wäre der größte Durchmesser die längste Diagonale zwischen zwei Ecken. Analoges gilt für den größten Innendurchmesser des Verdrehsicherungsbereichs, der sich auf den Querschnitt des äußeren Stützenteils, genauer, dessen Innenseite bzw. die erste Innenkontur, bezieht.

Um ein vollständiges Ausziehen des inneren Stützenteils zu blockieren, kann der innere Stützenteil einen Ausziehabschnitt besitzen und der Führungsbereich einen Innendurchmesser aufweisen, der im Wesentlichen dem größten Außendurchmesser des Ausziehabschnitts entspricht. Zweckmäßigerweise ist dabei der größte Außendurchmesser des Verdrehsicherungsabschnittes größer als der größte Außendurchmesser des Ausziehabschnittes. Der Verdrehsicherungsabschnittes kann somit nicht durch den Führungsbereich durchgeschoben werden. Die Durchmesser beziehen sich wiederum auf die Querschnitte der jeweiligen Elemente. Der Führungsbereich blockiert ein Herausziehen des Verdrehsicherungsabschnittes. Vorzugsweise weist der Führungsbereich eine im Wesentlichen kreisrunde Innenkontur auf.

Wenn ein Ausziehabschnitt vorhanden ist, kann dieser eine im Wesentlichen kreisrunde Außenkontur aufweisen, um die Herstellung des inneren Stützenteils zu vereinfachen und die Stabilität der Schalungsstütze insgesamt zu erhöhen. Die Außenkontur des Ausziehabschnitts bezeichnet die Außenkontur des Querschnitts des Ausziehabschnittes. Die Außenkontur des Ausziehabschnitts ist bevorzugt entlang seiner gesamten Längsausdehnung gleich. In einer bevorzugten Ausführungsform wird der Ausziehabschnitt durch ein Rundrohr oder einen Hohlzylinder gebildet. Alternativ können aber auch Vollzylinder vorgesehen sein.

In einer bevorzugten Ausführungsform ist vorgesehen, dass der innere Stützenteil zumindest ein Sicherungsloch und der äußere Stützenteil vorzugsweise im Führungsbereich zumindest eine Halteausnehmung, insbesondere ein Haltelangloch, aufweist, wobei eine teleskopierte Stellung der Schalungsstütze existiert, in der das Sicherungsloch und die zumindest eine Halteausnehmung derart übereinander liegen, dass durch das Sicherungsloch und die Halteausnehmung gleichzeitig ein Sicherungsbolzen durchführbar ist. Vorteilhaft ist, wenn mehrere Sicherungslöcher in regelmäßigen Abständen entlang einer Geraden entlang der Längsrichtung des inneren Stützenteils angeordnet sind. Wenn ein Ausziehabschnitt vorgesehen ist, ist das Sicherungsloch vorzugsweise in diesem vorgesehen. Insbesondere können, wenn der innere Stützenteil hohl ist, mehrere Lochpaare mit jeweils zwei gegenüberliegenden Sicherungslöcher vorgesehen sein. Vorzugsweise ist der Ausziehabschnitt als Rohr ausgebildet, das mehrere Lochpaare mit jeweils zwei gegenüberliegenden Sicherungslöchern aufweist, durch welche der Sicherungsbolzen quer zur Längsrichtung des inneren Stützenteils von der einen Seite des Rohres zur anderen durchführbar ist. Der äußere Stützenteil weist bevorzugt ebenfalls ein Lochpaar mit zwei an gegenüberliegenden Längsseiten des äußeren Stützenteils angeordneten Haltelöchern, insbesondere Haltelanglöchern, auf. Bei Vorhandensein von Lochpaaren am inneren Stützenteil sind diese vorteilhafterweise derart entlang der Längsachse des inneren Stützenteils orientiert, dass diese beim Teleskopieren der Schalungsstütze an den Haltelanglöchern vorbeigleiten, sodass der Sicherungsbolzen gleichzeitig durch den inneren und äußeren Stützenteil durchgeführt werden kann.

Um die Schalungsstütze zu arretieren, kann der äußere Stützenteil im Bereich der zumindest einen Halteausnehmung mit einem Sicherungsbolzen versehen sein, der durch die zumindest eine Halteausnehmung und das zumindest eine Sicherungsloch durchführbar ist. Vorzugsweise weist der Sicherungsbolzen zwei gegenüberliegende U-förmige Abschnitte mit unterschiedlichen Kurvenradien auf. Der U-förmige Abschnitt mit dem kleineren Kurvenradius weist einen Sicherungsschenkel auf, welcher durch die zumindest eine Halteausnehmung und das zumindest eine Sicherungsloch durchgeführt werden kann und so die Schaltungsstütze arretiert. Mit dem U-förmigen Abschnitt mit dem größeren Kurvenradius kann ein ungewolltes Entfernen des Sicherungsbolzens von der Schalungsstütze verhindert werden. Falls der äußere Stützenteil ein Haltelanglochpaar aufweist, ist der Sicherungsbolzen darin in Längsrichtung der Schalungsstütze verschieblich.

Zur Feinjustierung der Schalungsstütze im arretierten Zustand kann der äußere Stützenteil in einem Endbereich ein Außengewinde mit einer Mutter aufweisen. Vorzugsweise befindet sich das Außengewinde im Führungsbereich. Die Mutter ist eine sogenannte Überwurfmutter. Wenn zumindest ein Bereich des Haltelanglochs innerhalb des Außengewindes angeordnet ist, kann ein darin verschieblicher Sicherungsbolzen durch Verdrehen der Mutter in Längsrichtung der Schalungsstütze verschoben werden. Der Sicherungsbolzen ist dabei in das Haltelangloch eingeführt und lastet auf der Mutter. Um ein unbeabsichtigtes Verdrehen zu verhindern, kann die Mutter ein Sicherungselement aufweisen, das eine Verdrehung der Mutter blockiert.

Die erfindungsgemäße Aufgabe wird zudem durch eine Deckenschalung der eingangs erwähnten Art gelöst, bei der die zumindest Schalungsstütze wie oben beschrieben ausgeführt ist.

Im Folgenden werden bevorzugte Ausführungsformen der erfindungsgemäßen Schalungsstütze und der erfindungsgemäßen Deckenschalung an Hand von Figuren näher beschrieben, auf die sie jedoch nicht beschränkt sein sollen.
Fig. 1 zeigt eine Ausführungsvariante einer erfindungsgemäßen Schalungsstütze.
Fig. 2 zeigt einen Teil einer erfindungsgemäßen Schalungsstütze.
Fig. 3 zeigt einen Längsschnitt des Teils gemäß Fig. 2.
Fig. 4 zeigt einen unteren Endbereich einer erfindungsgemäßen Schalungsstütze.
Fig. 5 zeigt einen Querschnitt der Schalungsstütze in einem oberen Endbereich.
Fig. 6A - Fig 6C zeigen jeweils unterschiedliche Stellungen einer erfindungsgemäßen Schalungsstütze.
Fig. 7 zeigt eine erfindungsgemäße Deckenschalung mit mehreren gleichartigen Schalungsstützen.
Fig. 8 zeigt eine alternative Ausführungsform der erfindungsgemäßen Schalungsstütze in einer seitlichen Ansicht.
Fig. 9 zeigt die alternative Ausführungsform der erfindungsgemäßen Schalungsstütze in einer Ansicht von oben.
Fig. 10 zeigt einen Längsschnitt der Schalungsstütze gemäß Fig. 8.

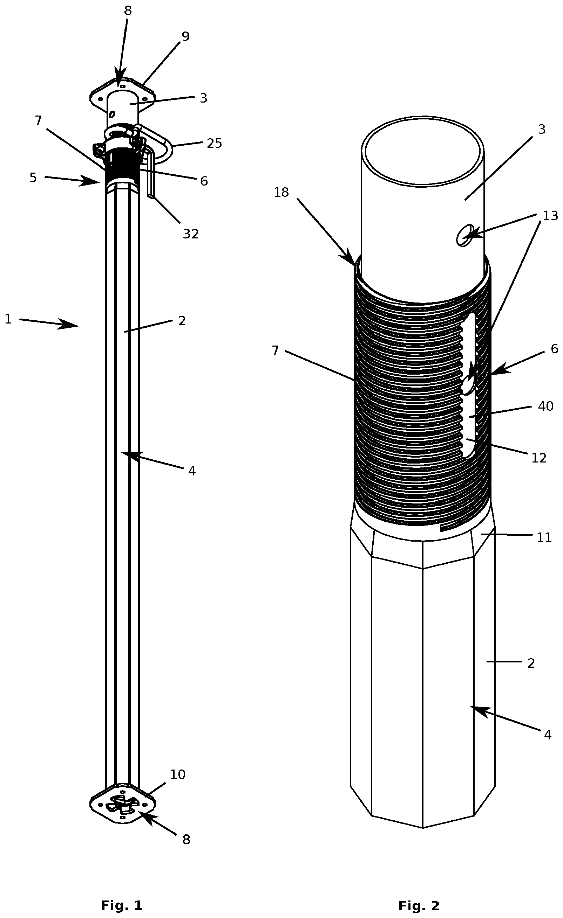

Fig. 1 zeigt eine erfindungsgemäße Schalungsstütze 1 mit einem äußeren Stützenteil 2 und einem darin angeordneten inneren Stützenteil 3. Zur Anpassung der Länge der Schalungsstütze 1 kann der innere Stützenteil 3 aus dem äußeren Stützenteil 2 herausgezogen, d.h. teleskopiert, werden. Somit kann die Schalungsstütze 1 von einer vollständig eingeschobenen Stellung in eine vollständig teleskopierte Stellung gebracht werden.

In der gezeigten Ausführungsform weist der äußere Stützenteil 2 einen Verdrehsicherungsbereich 4 mit einer 8-eckigen Außenkontur und in einem oberen Endbereich 5 einen Führungsbereich 6 mit einer im Wesentlichen kreisrunden Außenkontur zur Führung des inneren Stützenteils 3 auf. Die Außenkontur des Führungsbereichs 6 ist gegenüber der Außenkontur des Verdrehsicherungsbereichs 4 verjüngt und besitzt ein Außengewinde 7. An beiden Enden der Schalungsstütze 1 befinden sich Platten 8, nämlich eine Kopfplatte 9 und eine Bodenplatte 10. Die Bodenplatte 10 ist mit einem dem Führungsbereich 6 gegenüberliegenden, unteren Ende des äußeren Stützenteils 2 verbunden. Die Kopfplatte 9 ist mit einem aus dem Führungsbereich 6 herausragenden Ende des inneren Stützenteils 3 verbunden.

Wie in Fig. 2 genauer ersichtlich ist, ist im Wesentlichen der gesamte Führungsbereich 6 außenseitig von dem Außengewinde 7 umgeben. Das Außengewinde 7 kann beispielsweise eingefräst oder aufgeprägt sein. Der Führungsbereich 6 mit der im Wesentlichen kreisrunden Außenkontur geht in den Verdrehsicherungsbereich 4 mit der der 8-eckigen Außenkontur, vorzugsweise ohne Fügeverbindung und insbesondere stufenlos, über. Der Führungsbereich 6 und der Verdrehsicherungsbereich 4 können insbesondere einteilig, d.h. aus einem einzigen Werkstück, hergestellt worden sein. Es ist erkennbar, dass der Führungsbereich 6 im Vergleich zum Verdrehsicherungsbereich 4 einen verringerten Außendurchmesser aufweist. Der Übergangsbereich 11 zwischen dem Verdrehsicherungsbereich 4 und dem Führungsbereich 6 ist konisch zusammenlaufend.

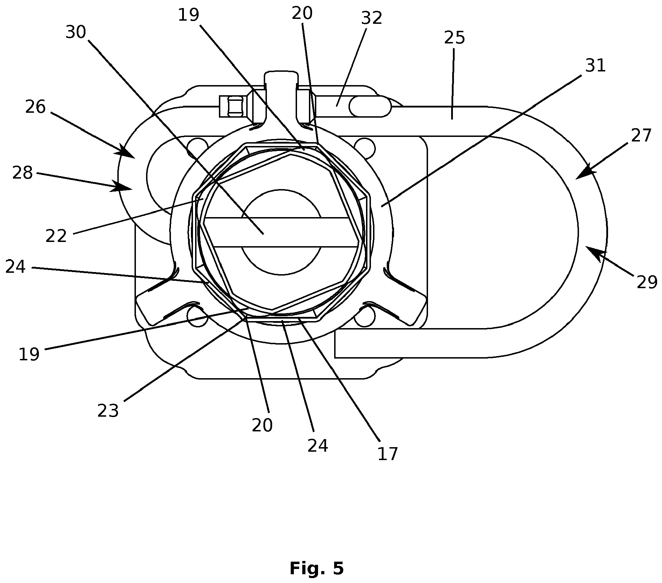

Ferner ist in Fig. 2 erkennbar, dass in dem Führungsbereich 6, innerhalb des Außengewindes 7, eine Halteausnehmung 40 in Form eines Haltelangloches 12 vorgesehen ist. Gegenüberliegend dem Haltelangloch 12, also auf der anderen Seite des Führungsbereichs 6, ist ein weiteres, gleichartiges Haltelangloch 12 vorgesehen (nicht erkennbar). Die beiden Haltelanglöcher 12 bilden gemeinsam ein Haltelanglochpaar. Zur Arretierung der Schalungsstütze 1 weist der innere Stützenteil 3 mehrere Sicherungslöcher 13 auf. Zwei auf gegenüberliegenden Seiten des inneren Stützenteils 3 liegende Sicherungslöcher 13 bilden wiederum ein Lochpaar. An dem inneren Stützenteil 3 sind mehrere solcher Lochpaare untereinander entlang einer Gerade angeordnet. Mit Hilfe der Sicherungslöcher 13, den Haltelanglöchern 12 und einem Sicherungsbolzen (nicht gezeigt) ist es möglich, die Schalungsstütze 1 in einer teleskopierten Stellung zu arretieren, wobei aber Verschiebungen des Sicherungsbolzens innerhalb der Haltelanglöcher 11 möglich sind. Zur Arretierung wird die Schalungsstütze 1 in eine Stellung gebracht, in der die Haltelanglöcher 12 über einem Lochpaar aus zwei Sicherungslöcher 13 liegen und somit der Sicherungsbolzen durch die Haltelanglöcher 12 und Sicherungslöcher 13 durchführbar ist. Um eine Feinjustierung bei der Arretierung vorzunehmen, kann eine Überwurfmutter 31 (siehe Fig. 5) vorgesehen sein, auf welcher der Sicherungsbolzen aufliegen kann und welche ein Innengewinde aufweist, das in das Außengewinde 7 eingreift. Durch Verdrehen der Überwurfmutter 31 kann die Position des Sicherungsbolzens in den Haltelanglöchern 12 verändert werden. Die Vorgehensweise bei der Arretierung wird weiter unten zu Fig. 5 erläutert.

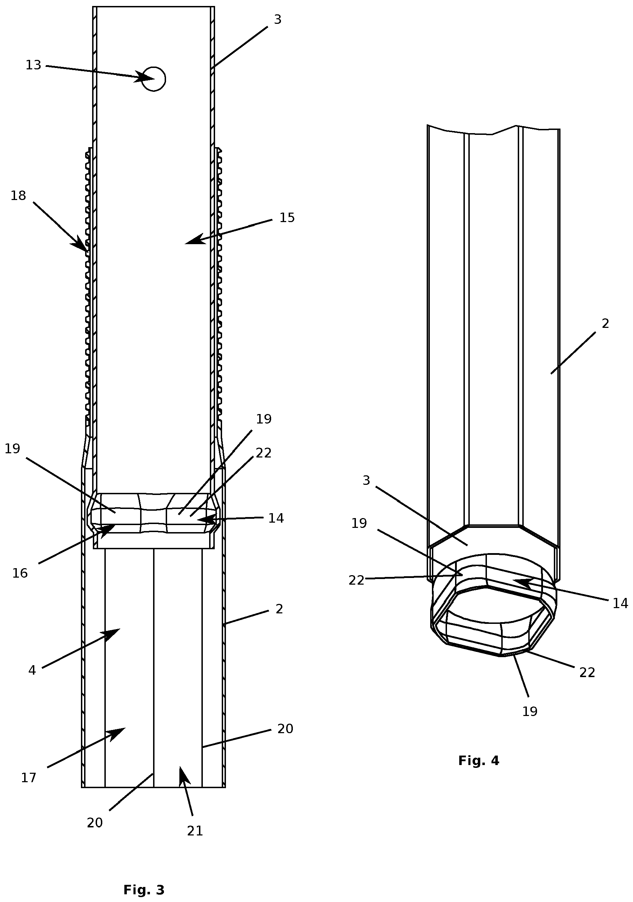

Fig. 3 zeigt einen Teil der Schalungsstütze 1 im Längsschnitt. Hierbei ist ersichtlich, dass der innere Stützenteil 3 in der gezeigten Ausführungsform einen Verdrehsicherungsabschnitt 14 und einen Ausziehabschnitt 15 aufweist. Der Verdrehsicherungsabschnitt 14 ist in einem Endbereich 16 des inneren Stützenteils 3 vorgesehen. Der Ausziehabschnitt 15 wird in der gezeigten Darstellung durch ein hohles Rundrohr gebildet und weist demnach über seine gesamte Längsausdehnung eine im Wesentlichen kreisrunde Außenkontur auf. Der Ausziehabschnitt 15 ist jener Abschnitt, der durch den Führungsbereich 6 durchführbar ist und somit die Schalungsstütze 3 beim Teleskopieren verlängert. Bei der gezeigten Ausführungsform wird immer ein Teil des Ausziehabschnitts 15 von dem Führungsbereich 6 verdeckt sein, da der Verdrehsicherungsabschnitt 14 auf Grund seiner Größe nicht durch den Führungsbereich 6 durchgeführt werden kann. In Fig. 2 und Fig. 3 ist zudem ersichtlich, dass der Verdrehsicherungsbereich 4 eine erste Innenkontur 17 und der Führungsbereich 6 eine von der ersten Außenkontur 17 verschiedene zweite Innenkontur 18 (vom inneren Stützenteil 2 verdeckt) aufweist, wobei die zweite Innenkontur 18 vorzugsweise gegenüber der ersten Innenkontur 17 verjüngt, also kleiner, ist. Somit weist der Führungsbereich 6 im Vergleich zum Verdrehsicherungsbereich 4 einen geringeren Innenddurchmesser auf. Bei dieser Ausführungsform ist die Innenkontur im gesamten Führungsbereich 6 und im gesamten Verdrehsicherungsbereich 4 jeweils gleich. Dies muss allerdings nicht zwingend der Fall sein. Wichtig ist, dass der der Führungsbereich 6 eine zweite Innenkontur 17 aufweist, die von der ersten Innenkontur 17 verschieden ist. Die erste Innenkontur 17 soll dabei eine Verdrehung des inneren Stützenteils blockieren, während die zweite Innenkontur 18 die Führung des inneren Stützenteils 3 ermöglicht. Die erste Innenkontur 17 des Verdrehsicherungsbereichs 4 weist, wie dessen Außenkontur, eine 8-eckige Form auf. Die zweite Innenkontur 18 des Führungsbereichs 6 weist, wie dessen Außenkontur, im Wesentlichen eine kreisrunde Form auf. Der Innendurchmesser des Führungsbereich 6 entspricht im Wesentlichen dem größten Außendurchmesser des Ausziehabschnittes 15, wobei ein geringes Spiel zwischen dem Ausziehabschnitt 15 und dem Führungsbereich 6 vorgesehen sein kann.
Der Verdrehsicherungsabschnitt 14 ist dazu eingerichtet, eine Verdrehung des inneren Stützenteils 3 gegenüber dem äußeren Stützenteil 2 zu blockieren, translatorische Verschiebungen des inneren Stützenteils 3 gegenüber dem äußeren Stützenteil 2 in Längsrichtung der Schalungsstütze 1 aber zu erlauben. Zu diesem Zweck weist der Verdrehsicherungsabschnitt 14 mehrere, im gezeigten Ausführungsbeispiel vier, Verdrehsicherungsausbuchtungen 19 auf. Die Verdrehsicherungsausbuchtungen 19 gleiten in länglichen Verdrehsicherungseinbuchtungen 20 an einer Innenseite 21 des äußeren Stützenteils 2 im Verdrehsicherungsbereich 4, wobei die Verdrehsicherungseinbuchtungen 20 in Längsrichtung der Schalungsstütze 1 orientiert sind. Die Innenseite 21 wird durch die Innenwandung des äußeren Stützenteils 2 gebildet.

Wie insbesondere aus Fig. 4 ersichtlich ist, weist die Außenkontur des Verdrehsicherungsabschnitts 14 die Form eines Quadrates mit abgerundeten Ecken 22 auf, wobei die Ecken 22 die Verdrehsicherungsausbuchtungen 19 bilden. Der größte Durchmesser der Verdrehsicherungsabschnittes 14, im dargestellten Fall die Diagonale des Quadrats der Außenkontur, ist größer als der Durchmesser des Querschnitts des Ausziehabschnitts 15. Dadurch wird die Verdrehsicherung ausschließlich durch den Verdrehsicherungsabschnitt 14 erzielt.

Wie in der Ansicht in Fig. 5 gezeigt ist, besitzt der äußere Stützenteil 2 im Verdrehsicherungsabschnitt 4 nicht nur eine regelmäßig 8-eckige Außenkontur, sondern auch eine regelmäßig 8-eckige erste Innenkontur 17. Die Ecken 23 der ersten Innenkontur 17 bilden dabei, im Querschnitt betrachtet, die Verdrehsicherungseinbuchtungen 20. Die Verdrehsicherungsausbuchtungen 19 gleiten in Längsrichtung in den Verdrehsicherungseinbuchtungen 20, welche sich, bis auf den Führungsbereich 6, im Wesentlichen über den gesamten äußeren Stützenteil 2 erstrecken. Der Verdrehsicherungsabschnitt 14 ist dabei von der Größe derart dimensioniert, dass die Verdrehsicherungsausbuchtungen 19, im Querschnitt betrachtet, bei Verdrehungen des inneren Stützenteils 3 von den die Ecken 23 des äußeren Stützenteils 2 verbindenden und die Ecken 23 bildenden Kanten 24 blockiert werden. Der größte Außendurchmesser des Verdrehsicherungsabschnitts 14 entspricht vorteilhafterweise im Wesentlichen dem größten Innendurchmesser des Verdrehsicherungsbereichs 4 des äußeren Stützenteils 2. Somit liegen die Ecken 22 des Verdrehsicherungsabschnittes 14 in den Ecken 23 des äußeren Stützenteils 2 und werden dabei durch die Kanten 24 gegen Verdrehungen gesichert.

Die Verdrehsicherungseinbuchtungen 20 erstrecken sich in dem gezeigten Ausführungsbeispiel von dem Führungsbereich 6 gegenüberliegenden Ende des äußeren Stützenteils 2 bis zu dem Führungsbereich 6. Um auf der einen Seite der Schalungsstütze 1 ein vollständiges Herausziehen des inneren Stützenteils 3 zu verhindern, weist der Führungsbereich 6 bzw. die zweite Innenkontur 18 einen geringeren Innendurchmesser als der größte Außendurchmesser des Verdrehsicherungsabschnitts 14 auf. Auf der anderen Seite der Schalungsstütze 1 verhindert die Bodenplatte 10 ein Herausziehen des inneren Stützenteils 3.

Um den inneren Stützenteil 3 in einer teleskopierten Stellung zu arretieren, ist bei der dargestellten Schalungsstütze 1 gemäß Fig. 5 ein Sicherungsbolzen 25 vorgesehen. Der gezeigte Sicherungsbolzen 25 besitzt zwei gegenüberliegende U-Förmige Abschnitte 26,27 mit unterschiedlichen Kurvenradien. Der U-förmige Abschnitt 26 mit dem kleineren Kurvenradius weist dabei einen Sicherungsabschnitt 28 auf, während der U-förmige Abschnitt 27 mit dem größeren Kurvenradius einen Greifabschnitt 29 aufweist. Ein Schenkel 30 des Sicherungsabschnittes 28 ist dazu eingerichtet, durch die Haltelanglöcher 12 und die Sicherungslöcher 13 durchgeführt zu werden und die Schalungsstütze 1 zu arretieren. Dieser Schenkel 30 des Sicherungsabschnittes 28 bildet somit den "eigentlichen" Sicherungsbolzen. Mit dem Greifabschnitt 29 wird die Verschiebung des Sicherungsbolzens 25 erleichtert. Der Sicherungsbolzen 25 ist in den Haltelanglöchern 12 in Längsrichtung verschieblich.

Um die Schalungsstütze 1 in der Höhe zu justieren, kann eine Überwurfmutter 31 vorgesehen sein. Die Überwurfmutter 31 weist ein Innengewinde (nicht gezeigt) auf und ist am Außengewinde 7 angeordnet und kann durch Verdrehung an diesem in Längsrichtung der Schalungsstütze 1 auf und ab bewegt werden. Wenn der Sicherungsbolzen 25 in die Haltelanglöcher 12, die im Außengewinde 7 angeordnet sind, eingeführt ist, kann dieser auf der Überwurfmutter 31 lasten. Durch Verdrehen der Überwurfmutter 31 wird der Sicherungsbolzen 25 in Längsrichtung der Langlöcher 12 verschoben. Wenn die Schalungsstütze 1 belastet ist, wird die Kraft vom inneren Stützenteil 3 über den Sicherungsbolzen 25 und die Überwurfmutter 31 auf den äußeren Stützenteil 2 übertragen. Um die Überwurfmutter 31 zu fixieren, kann diese ein Sicherungselement 32 aufweisen, das bei Aktivierung eine Verdrehung der Überwurfmutter 31 verhindert.

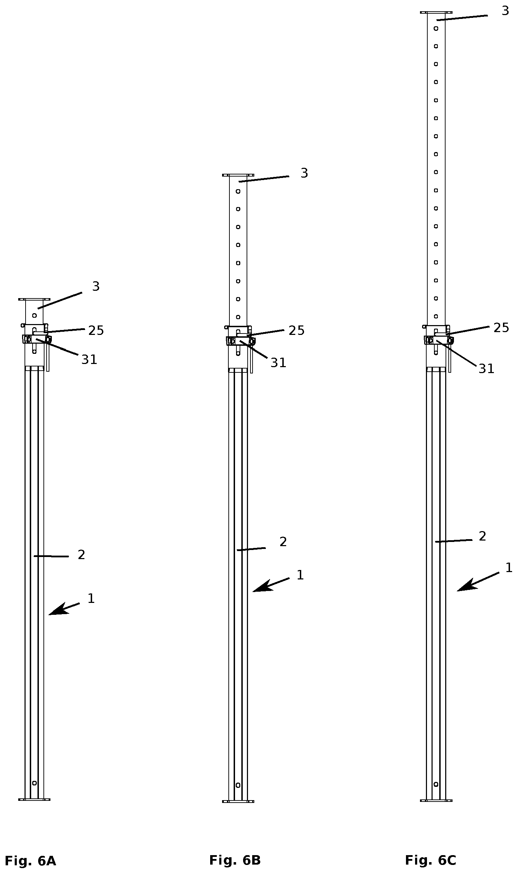

Fig. 6A-C zeigen die Schalungsstütze 1 in unterschiedlichen Stellungen, wobei in Fig. 6A der innere Stützenteil 3 am weitesten in den äußeren Stützenteil 2 eingeschoben ist. Die Schalungsstütze 1 wäre durch Verdrehen der Überwurfmutter 31 oder Entfernen des Sicherungsbolzens 25 sogar noch weiter einschiebbar. Fig. 6B zeigt eine weiter ausgezogene Stellung der Schalungsstütze 1. Fig. 6C zeigt eine noch weiter ausgezogene Stellung. Ein weiteres Ausziehen wäre bei der Stellung gemäß Fig. 6C nicht mehr möglich, da der Verdrehsicherungsabschnitt 14 bereits am Führungsbereich 6 ansteht.

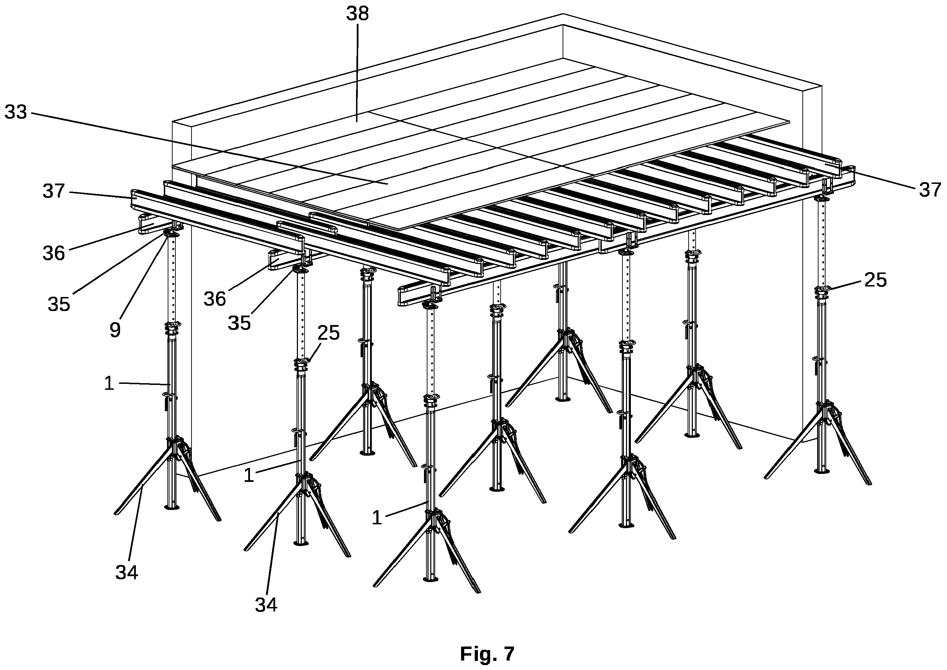

Fig. 7 zeigt eine erfindungsgemäße Deckenschalung 33 mit einer Vielzahl an gleichartigen Schalungsstützen 1. Die Schalungsstützen 1 sind in zueinander parallelen Reihen angeordnet und besitzen im unteren Bereich jeweils ein einklappbares Dreibein 34 zur Stabilisierung und Ausrichtung. An den Kopfplatten 9 der Schalungsstützen 1 sind Klammern 35 vorgesehen, die Längsträger 36 in Form von I-Trägern sichern. Auf den Längsträgern 36 lasten im rechten Winkel Querträger 37, sodass die Last des später zu gießenden Betons (nicht gezeigt) gleichmäßig abgetragen wird. Auf den Querträgern 37 befinden sich schließlich Schalungsplatten 38, auf die der Beton zur Erzeugung eines Deckenelements gegossen wird.

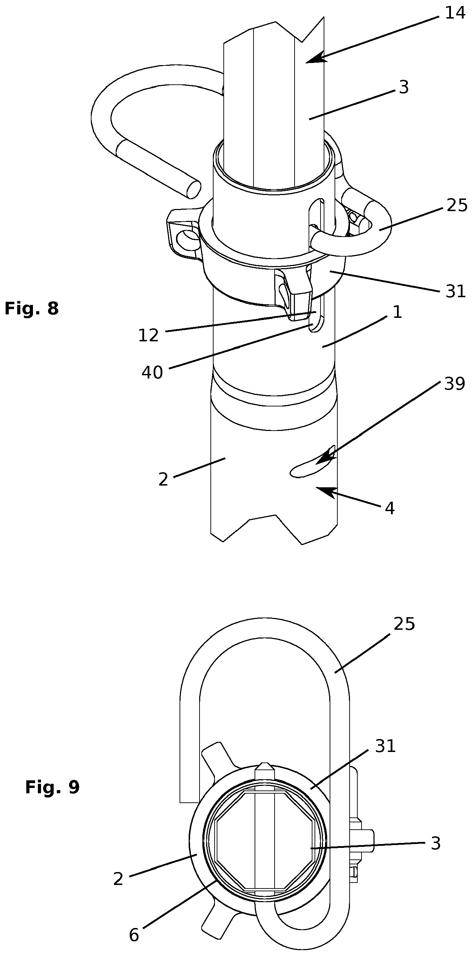

Fig. 8 zeigt eine alternative Ausführungsform der Schalungsstütze 1. Das Gewinde 7 wird nicht dargestellt. Bei dieser Ausführungsform wird der innere Stützenteil 3 durch ein n-eckiges Rohr gebildet. Der Verdrehsicherungsabschnitt 14 des inneren Stützenteils 3 erstreckt sich bei dieser Ausführungsform im Wesentlichen über die gesamte Länge des inneren Stützenteils 3. Der Verdrehsicherungsbereich 4 der äußeren Stützenteils 2 weist ein Verdrehsicherungselement 39 in Form einer Einbuchtung auf, welche vom äußeren Stützenteil 2 nach innen ragt. Das Verdrehsicherungselement 39 wirkt mit dem Verdrehsicherungsabschnitt 14 des inneren Stützenteils 3 derart zusammen, dass eine Verdrehung des inneren Stützenteils 3 beim Teleksopieren durch Formschluss blockiert wird. Die erste Innenkontur 17 wird hier durch die Innenwandung des äußeren Stützenteils 2 und die Verdrehsicherungselemente 39 definiert und unterscheidet sich von der zweiten Innenkontur 18 des Führungsbereichs. Die zweite Innenkontur 18 ist, wie bei der ersten Ausführungsform, im Wesentlichen kreisrund.

Fig. 9 zeigt die Schalungsstütze 1 in der alternativen Ausführungsform in einer Ansicht von oben.

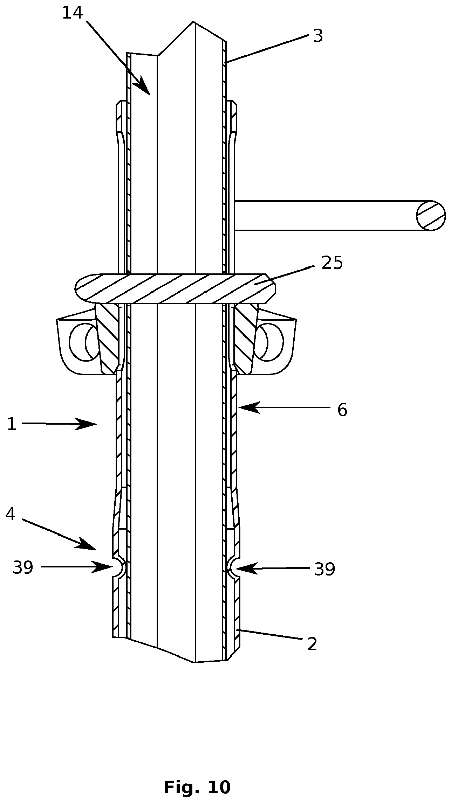

Fig. 10 zeigt einen Längsschnitt von der Ausführungsform gemäß Fig. 8.

## Patentansprüche

1. Schalungsstütze (1) mit einem äußeren Stützenteil (2) und einem teleskopierbaren inneren Stützenteil (3), wobei der innere Stützenteil (3) einen Verdrehsicherungsabschnitt (14) und der äußere Stützenteil (2) einen Verdrehsicherungsbereich (4) mit einer ersten Innenkontur (17) aufweist, wobei der Verdrehsicherungsbereich (4) des äußeren Stützenteils (2) beim Teleskopieren des inneren Stützenteils (3) derart mit dem Verdrehsicherungsabschnitt (14) des inneren Stützenteils (3) zusammenwirkt, dass eine Verdrehung des inneren Stützenteils (3) um seine Längsachse gegenüber dem äußeren Stützenteil (2) blockiert wird, **dadurch gekennzeichnet, dass** der äußere Stützenteil (2) einen Führungsbereich (6) mit einer von der ersten Innenkontur (17) verschiedenen zweiten Innenkontur (18) zur Führung des inneren Stützenteils (3) aufweist.

2. Schalungsstütze (1) nach Anspruch 1, **dadurch gekennzeichnet, dass** die zweite Innenkontur (18) eine kreisrunde Form aufweist und vorzugsweise gegenüber der ersten Innenkontur (17) verjüngt ist.

3. Schalungsstütze (1) nach Anspruch 1 oder 2, **dadurch gekennzeichnet, dass** der Verdrehsicherungsbereich (4) und der Führungsbereich (6) einstückig ausgebildet sind und insbesondere stufenlos ineinander übergehen.

4. Schalungsstütze (1) nach einem der Ansprüche 1 bis 3, **dadurch gekennzeichnet, dass** der Verdrehsicherungsabschnitt (14) zumindest eine Verdrehsicherungsausbuchtung (19) und der äußere Stützenteil (2) im Verdrehsicherungsbereich (4) eine Verdrehsicherungseinbuchtung (20) aufweist, wobei die Verdrehsicherungsausbuchtung (19) beim Teleskopieren des inneren Stützenteils (3) entlang der Verdrehsicherungseinbuchtung (20) verschieblich ist und eine Verdrehung des inneren Stützenteils (3) um seine Längsachse gegenüber dem äußeren Stützenteil (2) blockiert.

5. Schalungsstütze (1) nach Anspruch 4, **dadurch gekennzeichnet, dass** die erste Innenkontur (17) eine n-eckige, vorzugsweise einen regelmäßig n-eckige, insbesondere einen 6- oder 8-eckige, Querschnittsform aufweist und die Verdrehsicherungseinbuchtungen (20) durch die n Ecken (23) der ersten Innenkontur (17) gebildet werden.

6. Schalungsstütze (1) nach Anspruch 4 oder 5, **dadurch gekennzeichnet, dass** der Verdrehsicherungsabschnitt (14) des inneren Stützenteils (3) eine n-eckige, vorzugsweise eine regelmäßig n-eckige, insbesondere eine im Wesentlichen quadratische, Außenkontur aufweist und die n Ecken (22) der Außenkontur jeweils eine Verdrehsicherungsausbuchtung (19) bilden, wobei die Ecken (22) vorzugsweise abgerundet sind.

7. Schalungsstütze (1) nacheinem der Ansprüche 1 bis 6, **dadurch gekennzeichnet, dass** der Verdrehsicherungsabschnitt (14) an einem Endbereich (16) des inneren Stützenteils (3) vorgesehen ist.

8. Schalungsstütze (1) nach Anspruch 7, **dadurch gekennzeichnet, dass** sich der Verdrehsicherungsbereich (4) über die von dem Verdrehsicherungsabschnitt (14) zurückgelegte Distanz zwischen einer vollständig teleskopierte und einer vollständig eingeschobenen Stellung des inneren Stützenteils (3) erstreckt.

9. Schalungsstütze (1) nach einem der Ansprüche 1 bis 8,
**dadurch gekennzeichnet, dass** der größte Außendurchmesser des Verdrehsicherungsabschnitts (14) im Wesentlichen dem größten Innendurchmesser des Verdrehsicherungsbereichs (4) entspricht.

10. Schalungsstütze (1) nach einem der Ansprüche 1 bis 9,
**dadurch gekennzeichnet, dass** der innere Stützenteil (3) einen Ausziehabschnitt (15) aufweist und der Führungsbereich (6) einen kleinsten Innendurchmesser aufweist, der im Wesentlichen dem größten Außendurchmesser des Ausziehabschnitts (15) entspricht.

11. Schalungsstütze nach einem der Ansprüche 1 bis 10, **dadurch gekennzeichnet, dass** der innere Stützenteil (3) zumindest ein Sicherungsloch (13) und der äußere Stützenteil (2) vorzugsweise im Führungsbereich (6) zumindest eine Halteausnehmung (40), insbesondere ein Haltelangloch (12), aufweist, wobei eine teleskopierte Stellung der Schalungsstütze (1) existiert, in der das zumindest eine Sicherungsloch (13) und die Halteausnehmung (40) derart übereinander liegen, dass durch das zumindest eine Sicherungsloch (13) und die Halteausnehmung (40) gleichzeitig ein Sicherungsbolzen (25) durchführbar ist.

12. Schalungsstütze (1) nach Anspruch 11, **dadurch gekennzeichnet, dass** der äußere Stützenteil (2) im Bereich der zumindest einen Halteausnehmung (40) den Sicherungsbolzen (25) aufweist, der durch die Halteausnehmung (40) und das zumindest eine Sicherungsloch (13) durchführbar ist.

13. Schalungsstütze (1) nach Anspruch 12, **dadurch gekennzeichnet, dass** der Sicherungsbolzen (25) zwei gegenüberliegende U-förmige Abschnitte (26,27) mit unterschiedlichen Kurvenradien aufweist, wobei der U-förmige Abschnitt (27) mit dem größeren Kurvenradius einen Greifabschnitt (29) und der U-förmige Abschnitt (26) mit dem kleineren Kurvenradius einen Sicherungsabschnitt (28) darstellt, wobei der Sicherungsabschnitt (28) einen Schenkel (30) aufweist, der in die Halteausnehmung (40) und das Sicherungsloch (13) einführbar ist.

14. Schalungsstütze (1) nach einem der Ansprüche 1 bis 13, **dadurch gekennzeichnet, dass** der äußere Stützenteil (2) in einem Endbereich (5), vorzugsweise im Führungsbereich (6), ein Außengewinde (7) mit einer Mutter (31) aufweist.

15. Deckenschalung (33) zur Herstellung eines Deckenelements mit zumindest einer Schalungsplatte (38) und zumindest einer Schalungsstütze (1), **dadurch gekennzeichnet, dass** die zumindest eine Schalungsstütze (1) nach einem der Ansprüche 1 bis 13 ausgebildet ist.
